(19) Europäisches Patentamt
European Patent Office
Office européen des brevets

(11) EP 3 950 808 A1

(12) EUROPEAN PATENT APPLICATION
published in accordance with Art. 153(4) EPC

(43) Date of publication:
**09.02.2022 Bulletin 2022/06**

(21) Application number: **20776507.4**

(22) Date of filing: **09.01.2020**

(51) International Patent Classification (IPC):
***C08K 5/521*** *(2006.01)* ***C08L 27/12*** *(2006.01)*
***C08L 51/08*** *(2006.01)* ***C08L 69/00*** *(2006.01)*
***C08L 81/06*** *(2006.01)* ***C08K 3/013*** *(2018.01)*
***C08K 3/34*** *(2006.01)*

(52) Cooperative Patent Classification (CPC):
**C08K 3/013; C08K 3/34; C08K 5/521; C08L 27/12; C08L 51/08; C08L 69/00; C08L 81/06**

(86) International application number:
**PCT/JP2020/000410**

(87) International publication number:
**WO 2020/194996 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2019 JP 2019060446**
**20.08.2019 JP 2019150373**

(71) Applicant: **SEKISUI CHEMICAL CO., LTD.**
**Osaka-shi**
**Osaka**
**530-8565 (JP)**

(72) Inventors:
- **OOZEKI, Hiroki**
**Kyoto-shi, Kyoto 601-8105 (JP)**
- **TAKANO, Hirotaka**
**Kyoto-shi, Kyoto 601-8105 (JP)**
- **KOSAI, Takuto**
**Kyoto-shi, Kyoto 601-8105 (JP)**

(74) Representative: **Ter Meer Steinmeister & Partner Patentanwälte mbB**
**Nymphenburger Straße 4**
**80335 München (DE)**

(54) **RESIN COMPOSITION AND MOLDED OBJECT**

(57) Provided is a resin composition which has superior shapeability and affords a molded article superior in flame retardancy and impact resistance. The resin composition according to the present invention includes an aromatic polycarbonate resin, a sulfone resin having a structure represented by the following formula (1), an inorganic filler, a phosphorus-containing compound, and a silicon-containing compound or silicon-containing particles.

[Chemical 1]

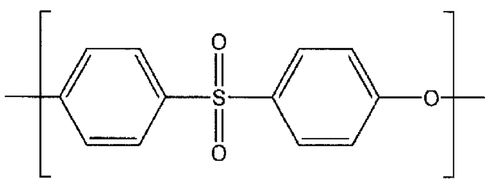

...(1)

EP 3 950 808 A1

## Description

### TECHNICAL FIELD

The present invention relates to a resin composition including an aromatic polycarbonate resin. The present invention also relates to a molded article including an aromatic polycarbonate resin.

### BACKGROUND ART

Thermoplastic resins such as polycarbonate resins are superior in durability, light weight property, molding processability, etc. For this, thermoplastic resins are used in various fields such as a construction field, a home appliance field, and a transportation field.

Specific uses of thermoplastic resins include interior materials for transport carriers such as railway vehicles, aircrafts, ships and automobiles. Examples of the interior material include ceilings, window frames, armrests, backrests, and tables.

In the above-mentioned applications, molded articles prepared using thermoplastic resins are required to be superior in flame retardancy and impact resistance. However, since thermoplastic resins are generally flammable and vulnerable to impact, studies have been widely conducted to improve the flame retardancy and the impact resistance of molded articles prepared using thermoplastic resins.

Patent Document 1 cited below discloses a thermoplastic resin composition including (a) a polyetherimide resin, (b) an aromatic polycarbonate resin, and (c) a functionalized polysiloxane polymer.

Patent Document 2 cited below discloses a sulfone polymer composition including a high glass transition temperature sulfone polymer (A) having a specific structure, a miscible polymer (B), and an immiscible polymer (C).

### Related Art Document

### Patent Document

Patent Document 1: JP 11-256035 A
Patent Document 2: JP 2008-516028 T

### SUMMARY OF THE INVENTION

### PROBLEMS TO BE SOLVED BY THE INVENTION

When a resin composition is molded, a molded article having a prescribed shape can be produced by vacuum forming. In vacuum forming, a molded article is generally produced through the following steps (1), (2), and (3). (1) The resin composition is molded to afford a molded article in a sheet form. (2) The resulting molded article in a sheet form is heated and softened. (3) The softened molded article in a sheet form is vacuum-sucked in conformity with a mold and the molded article in the sheet form is thereby transformed to afford a molded article having a prescribed shape.

The resin compositions described in Patent Documents 1 and 2 may be inferior in shapeability. For example, when a molded article is produced by vacuum forming using the resin composition, it is necessary to heat it at a high temperature (for example, 220°C or higher), or the molded article in a sheet form is difficult to be transformed.

With respect to a conventional molded article containing resin, the impact resistance of the molded article may be deteriorated when the flame retardancy thereof is tried to be enhanced, and the flame retardancy of the molded article may be deteriorated when the impact resistance thereof is tried to be enhanced.

Molded articles obtainable from the resin compositions described in Patent Documents 1 and 2 can improve flame retardancy and impact resistance to some extent but insufficiently, and further improvement in flame retardancy and impact resistance is required.

An object of the present invention is to provide a resin composition which is superior in shapeability and from which a molded article superior in flame retardancy and impact resistance can be obtained. Another object of the present invention is to provide a molded article prepared using the resin composition.

### MEANS FOR SOLVING THE PROBLEMS

According to a broad aspect of the present invention, there is provided a resin composition including an aromatic

polycarbonate resin, a sulfone resin having a structure represented by the following formula (1), an inorganic filler, a phosphorus-containing compound, and a silicon-containing compound or silicon-containing particles.

[Chemical 1]

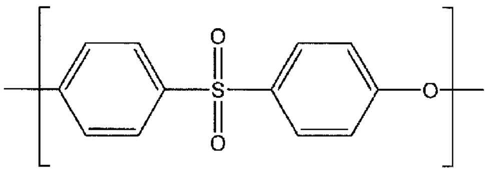

···(1)

In a certain aspect of the resin composition according to the present invention, the sulfone resin is a polyphenylsulfone resin having a structure represented by the following formula (11).

[Chemical 2]

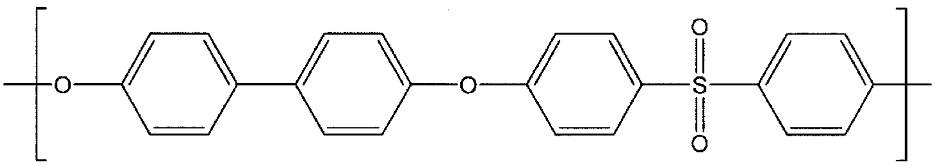

···(11)

In a certain aspect of the resin composition according to the present invention, the content of the sulfone resin is 5% by weight or more and 35% by weight or less in 100% by weight of the content of the aromatic polycarbonate resin and the content of the sulfone resin in total.

In a certain aspect of the resin composition according to the present invention, the weight ratio of the content of the sulfone resin to the content of the phosphorus-containing compound is 0.6 or more and 3.5 or less.

In a certain aspect of the resin composition according to the present invention, the content of the phosphorus-containing compound is 5 parts by weight or more and 16 parts by weight or less per 100 parts by weight of the content of the aromatic polycarbonate resin and the content of the sulfone resin in total.

In a certain aspect of the resin composition according to the present invention, the content of the inorganic filler is 10 parts by weight or more and 40 parts by weight or less per 100 parts by weight of the content of the aromatic polycarbonate resin and the content of the sulfone resin in total.

In a certain aspect of the resin composition according to the present invention, the inorganic filler is talc.

In a certain aspect of the resin composition according to the present invention, the total content of the silicon-containing compound and the silicon-containing particles is 2 parts by weight or more and 20 parts by weight or less per 100 parts by weight of the content of the aromatic polycarbonate resin and the content of the sulfone resin in total.

In a certain aspect of the resin composition according to the present invention, the resin composition includes the silicon-containing particles, wherein the silicon-containing particles are core-shell particles each including a core and a shell disposed on a surface of the core.

In a certain aspect of the resin composition according to the present invention, the resin composition includes a fluororesin, wherein the content of the fluororesin is 0.5 parts by weight or more and 2 parts by weight or less per 100 parts by weight of the content of the aromatic polycarbonate resin and the content of the sulfone resin in total.

According to a broad aspect of the present invention, there is provided a molded article obtainable by molding the aforementioned resin composition.

In a certain aspect of the molded article according to the present invention, the molded article is in a sheet form.

In a certain aspect of the molded article according to the present invention, the average maximum heat generation rate measured in accordance with ISO5660-1 at an amount of heat radiated from a heater of 50 $kW/m^2$ with ignition is 130 $kW/m^2$ or less.

In a certain aspect of the molded article according to the present invention, the molded article is an interior material for a transport carrier.

In a certain aspect of the molded article according to the present invention, the molded article is an interior

material for a railway vehicle.

## EFFECT OF THE INVENTION

The resin composition according to the present invention includes an aromatic polycarbonate resin, a sulfone resin having a structure represented by the above formula (1), an inorganic filler, a phosphorus-containing compound, and a silicon-containing compound or silicon-containing particles. Since the resin composition according to the present invention has the above-described configuration, it is superior in shapeability and molded articles obtainable therefrom are superior in flame retardancy and impact resistance.

## MODES FOR CARRYING OUT THE INVENTION

Hereinafter, the present invention will be described in detail.
The resin composition according to the present invention includes an aromatic polycarbonate resin, a sulfone resin having a structure represented by the following formula (1), an inorganic filler, a phosphorus-containing compound, and a silicon-containing compound or silicon-containing particles.

[Chemical 3]

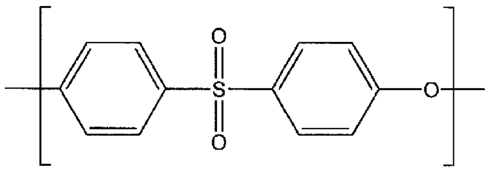

···(1)

Since the resin composition according to the present invention has the above-described configuration, it is superior in shapeability and molded articles obtainable therefrom are superior in flame retardancy and impact resistance. The resin composition according to the present invention can enhance all of shapeability, flame retardancy, and impact resistance. Since the resin composition according to the present invention is superior in shapeability, for example, it can afford a molded article having a prescribed shape without being heated at a high temperature.
In the present specification, the silicon-containing compound and the silicon-containing particles may be collectively referred to as a silicon-containing substance.
Hereinafter, details of the components contained in the resin composition according to the present invention will be described.

[Aromatic polycarbonate resin]

The resin composition according to the present invention contains an aromatic polycarbonate resin. Only one kind of the aromatic polycarbonate resin may be used, and two or more kinds thereof may be used in combination.
The aromatic polycarbonate resin is preferably an aromatic polycarbonate resin having a structural unit represented by the following formula (2).

[Chemical 4]

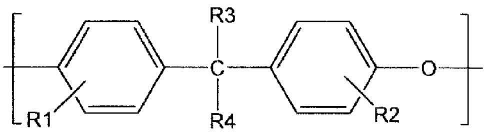

···(2)

In the above formula (2), R1 and R2 each represent a hydrogen atom, an alkyl group having 1 or more and 20 or less carbon atoms, a group in which a substituent is bonded to an alkyl group having 1 or more and 20 or less carbon atoms, or an aryl group. In the above formula (2), R3 and R4 each represent a hydrogen atom or an alkyl group.
When R3 or R4 in the above formula (2) is an alkyl group, the number of the carbon atoms of the alkyl group is preferably 1 or more, preferably 6 or less, more preferably 3 or less, and even more preferably 2 or less. Examples of preferred alkyl groups include methyl group, ethyl group, propyl group, butyl group, tert-butyl group, pentyl group, and

heptyl group.

The aromatic polycarbonate resin may have only one type of structural unit represented by the above formula (2), or may have two or more types thereof.

Examples of the compound for introducing the structural unit represented by the above formula (2) in obtaining an aromatic polycarbonate resin include 2,2-bis(4-hydroxyphenyl)propane (bisphenol A), 2,2-bis(4-hydroxy-3-methylphenyl)propane, 2,2-bis(4-hydroxyphenyl)butane, 2,2-bis(4-hydroxyphenyl)pentane, 2,2-bis(4-hydroxyphenyl)-4-methylpentane, 2,2-bis(4-hydroxy-3-methylphenyl)propane (bisphenol C), 2,2-bis(4-hydroxy-3-(1-methylethyl)phenyl)propane, 2,2-bis(4-hydroxy-3-tert-butylphenyl)propane, 2,2-bis(4-hydroxy-3-(1-methylpropyl)phenyl)propane, 2,2-bis(4-hydroxy-3-cyclohexylphenyl)propane, 2,2-bis(4-hydroxy-3-phenylphenyl)propane, 1,1-bis(4-hydroxyphenyl)decane, 1,1-bis(4-hydroxyphenyl)cyclohexane (bisphenol Z), 1,1-bis(4-hydroxyphenyl)-1-phenylethane, bis(4-hydroxyphenyl)phenylmethane, 1,1-bis(4-hydroxy-3-methylphenyl)cyclohexane, 1,1-bis(4-hydroxy-3,5-dimethylphenyl)cyclohexane, 1,1-bis(4-hydroxy-3-(1-methylethyl)phenyl)cyclohexane, 1,1-bis(4-hydroxy-3-tert-butylphenyl)cyclohexane, 1,1-bis(4-hydroxy-3-(1-methylpropyl)phenyl)cyclohexane, 1,1-bis(4-hydroxy-3-cyclohexylphenyl)cyclohexane, 1,1-bis(4-hydroxy-3-phenylphenyl)cyclohexane, 1,1-bis(4-hydroxy-3-methylphenyl)-1-phenylethane, 1,1-bis(4-hydroxy-3,5-dimethylphenyl)-1-phenylethane, 1,1-bis(4-hydroxy-3-(1-methylethyl)phenyl)-1-phenylethane, 1,1-bis(4-hydroxy-3-tert-butylphenyl)-1-phenylethane, 1,1-bis(4-hydroxy-3-(1-methylpropyl)phenyl)-1-phenylethane, 1,1-bis(4-hydroxy-3-cyclohexylphenyl)-1-phenylethane, 1,1-bis(4-hydroxy-3-phenylphenyl)-1-phenylethane, 1,1-bis(4-hydroxyphenyl)cyclopentane, 1,1-bis(4-hydroxyphenyl)cyclooctane, 4,4'-(1,3-phenylenediisopropyridene)bisphenol, 4,4'-(1,4-phenylenediisopropyridene)bisphenol, 9,9-bis(4-hydroxyphenyl)fluorene, 9,9-bis(4-hydroxy-3-methylphenyl)fluorene, 4,4'-dihydroxybenzophenone, 4,4'-dihydroxyphenyl ether, 4,4'-dihydroxybiphenyl, 1,1-bis(4-hydroxyphenyl)-3,3-5-trimethylcyclohexane, and 1,1-bis(4-hydroxy-6-methyl-3-tert-butylphenyl) butane.

From the viewpoint of further enhancing flame retardancy and impact resistance, the compound for introducing the structural unit represented by the above formula (2) in obtaining the aromatic polycarbonate resin is preferably 2,2-bis(4-hydroxyphenyl)propane (bisphenol A), 2,2-bis(4-hydroxy-3-methylphenyl)propane (bisphenol C), or 1,1-bis(4-hydroxyphenyl)cyclohexane (bisphenol Z), and more preferably 2,2-bis(4-hydroxyphenyl)propane (bisphenol A). The aromatic polycarbonate resin preferably has a structural unit derived from such a preferred compound.

Examples of commercially available aromatic polycarbonate resins having a structural unit derived from a bisphenol A type compound include "IUPILON E Series" manufactured by Mitsubishi Gas Chemical Co., Ltd.

Examples of commercially available aromatic polycarbonate resins having a structural unit derived from a bisphenol Z type compound include "Panlite Series" manufactured by Teijin Chemicals Ltd. and "IUPILON Z series" manufactured by Mitsubishi Gas Chemical Co., Inc.

The viscosity average molecular weight (Mv) of the aromatic polycarbonate resin is preferably 10,000 or more and more preferably 15,000 or more, and preferably 50,000 or less and more preferably 40,000 or less. When the viscosity average molecular weight is in the range from the above lower limit to the above upper limit, the flame retardancy and the impact resistance can be further enhanced.

The aromatic polycarbonate resin may or may not have a branched structure.

The aromatic polycarbonate resin can be produced by a conventionally known method. Examples of the method for producing the aromatic polycarbonate resin include a melt polymerization method and a phase interface method.

Examples of the method for producing an aromatic polycarbonate resin by the above-mentioned melt polymerization method include a method in which a diphenol compound and a diphenyl carbonate compound are reacted in a molten state by utilizing a transesterification reaction. In this method, for example, a diphenol compound and a diphenyl carbonate compound can be brought into a molten state by placing them in a reactor equipped with a stirrer and a distillate concentrator and heating the reactor to a prescribed temperature in a nitrogen gas atmosphere. In the method for producing an aromatic polycarbonate resin by the above-mentioned melt polymerization method, a branching agent, a chain terminator, etc. may be used.

Examples of the method for producing an aromatic polycarbonate resin by the above-mentioned phase interface method include a method in which a diphenol compound, a carbonic acid halide or an aromatic dicarboxylic acid dihalide, an optional branching agent, and an optional chain terminator are reacted together. In this method, a carbonic acid halide may be used, an aromatic dicarboxylic acid dihalide may be used, or both a carbonate halide and an aromatic dicarboxylic acid dihalide may be used.

The diphenol compound is not particularly limited. As the diphenol compound, a conventionally known diphenol compound may be used. Only one kind of the diphenol compound may be used, or two or more kinds thereof may be used in combination.

The diphenyl carbonate compound is not particularly limited. As the diphenyl carbonate compound, a conventionally known diphenyl carbonate compound may be used. Only one kind of the diphenyl carbonate compound may be used, or two or more kinds thereof may be used in combination.

The carbonic acid halide is not particularly limited. As the carbonic acid halide, a conventionally known carbonic acid halide may be used. Only one kind of the carbonic acid halide may be used, or two or more kinds thereof may be

used in combination.

The carbonic acid halide is preferably phosgene.

The aromatic dicarboxylic acid dihalide is not particularly limited. As the aromatic dicarboxylic acid dihalide, a conventionally known aromatic dicarboxylic acid dihalide may be used. Only one kind of the aromatic dicarboxylic acid dihalide may be used or two or more kinds thereof may be used in combination.

The aromatic dicarboxylic acid dihalide is preferably a benzenedicarboxylic acid dihalide.

The branching agent is not particularly limited. As the branching agent, a conventionally known branching agent may be used. Only one kind of the branching agent may be used or two or more kinds thereof may be used in combination.

The branching agent is preferably a trifunctional phenol compound or a tetrafunctional phenol compound, more preferably triphenol, tetraphenol, or a phenol compound having at least three functional groups with low reactivity, and even more preferably 1,1,1-tris-(p-hydroxyphenyl)ethane. By using these preferable branching agents, an aromatic polycarbonate resin having a branched structure can be satisfactorily obtained.

The branching agent may be a phenol compound having an amine functional group. When the branching agent is a phenol compound having an amine functional group, the amine functional group acts as an active functional group, and branching of the aromatic polycarbonate resin occurs through an amide linkage.

The chain terminator is not particularly limited. As the chain terminator, a conventionally known chain terminator may be used. Only one kind of the chain terminator may be used or two or more kinds thereof may be used in combination.

From the viewpoint of obtaining an aromatic polycarbonate resin satisfactorily, the chain terminator is preferably phenol; p-chlorophenol; p-tert-butylphenol; 2,4,6-tribromophenol; long-chain alkylphenols described in DE-A 2 842 005, such as 4-(1,3-tetramethylbutyl)-phenol and monoalkylphenols having 8 to 20 carbon atoms in the alkyl substituent; or alkylphenols such as 3,5-di-tert-butylphenol, p-isooctylphenol, p-tert-octylphenol, p-dodecylphenol, 2-(3,5-dimethylheptyl)-phenol, and 4-(3,5-dimethylheptyl)-phenol.

From the viewpoint of obtaining an aromatic polycarbonate resin satisfactorily, the content of the chain terminator is preferably 0.5 mol or more and preferably 10 mol or less per 100 mol of the diphenol compound.

The content of the aromatic polycarbonate resin in 100% by weight of the resin composition is preferably 50% by weight or more and more preferably 55% by weight or more, and preferably 85% by weight or less and more preferably 80% by weight or less. When the content of the aromatic polycarbonate resin is in the range from the above lower limit to the above upper limit, the flame retardancy and the impact resistance can be further enhanced.

[Sulfone resin]

The resin composition according to the present invention contains a sulfone resin having a structure represented by the following formula (1). The sulfone resin is a thermoplastic resin. When the resin composition contains the sulfone resin having the structure represented by the following formula (1), even in the case where a molded article thereof burns, carbides (chars) are satisfactorily formed on the surface of the molded article and the oxygen supply can be reduced. As a result, the flame retardancy of the molded article can be improved. When the resin composition does not contain the sulfone resin, it is difficult to improve the flame retardancy. Further, when the resin composition contains both a sulfone resin having a structure represented by the following formula (1) and the phosphorus-containing compound, the shapeability and the flame retardancy can be enhanced. Only one kind of the sulfone resin may be used or two or more kinds thereof may be used in combination.

[Chemical 5]

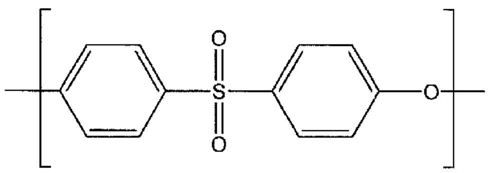

···(1)

The sulfone resin has a structural unit represented by the above formula (1).

Examples of the sulfone resin include polysulfone resin (PSU), polyethersulfone resin (PESU), and polyphenylsulfone resin (PPSU).

From the viewpoint of further enhancing the flame retardancy and the impact resistance, the sulfone resin is preferably a polyethersulfone resin or a polyphenylsulfone resin, and more preferably a polyphenylsulfone resin.

From the viewpoint of further enhancing the flame retardancy and the impact resistance, the sulfone resin is preferably a polyphenylsulfone resin having a structure represented by the following formula (11). The sulfone resin is

preferably a polyphenylsulfone resin having a structural unit represented by the following formula (11).

[Chemical 6]

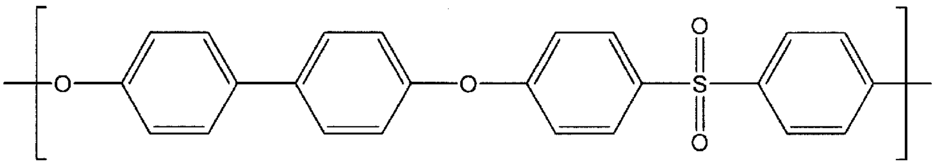

···(11)

In 100% by weight of the total of the content of the aromatic polycarbonate resin and the content of the sulfone resin, the content of the sulfone resin is preferably 5% by weight or more, more preferably 8% by weight or more, and even more preferably 10% by weight or more, and preferably 40% by weight or less, more preferably 35% by weight or less, even more preferably 30% by weight or less, and particularly preferably 25% by weight or less. When the content of the sulfone resin is in the range from the above lower limit to the above upper limit, the shapeability and the flame retardancy can be further enhanced.

The weight ratio of the content of the sulfone resin to the content of the phosphorus-containing compound (the content of the sulfone resin/the content of the phosphorus-containing compound) is preferably 0.6 or more and more preferably 0.7 or more, and preferably 6.0 or less, more preferably 4.0 or less, even more preferably 3.5 or less, and particularly preferably 3.0 or less. When the weight ratio (the content of the sulfone resin/the content of the phosphorus-containing compound) is in the range from the above lower limit to the above upper limit, the shapeability, the flame retardancy and the impact resistance can be further enhanced. When the weight ratio (the content of the sulfone resin/the content of the phosphorus-containing compound) is in the range from the above lower limit to the above upper limit, especially the shapeability and flame retardancy can be further enhanced.

[Inorganic filler]

The resin composition according to the present invention contains an inorganic filler. When the resin composition contains the inorganic filler, the flame retardancy can be enhanced. When the resin composition does not contain the inorganic filler, it is difficult to improve the flame retardancy. Only one kind of the inorganic filler may be used or two or more kinds thereof may be used in combination.

Examples of the inorganic filler include talc, mica, montmorillonite, diatomaceous earth, alumina, titanium oxide, calcium oxide, magnesium oxide, iron oxide, tin oxide, antimony oxide, ferrites, calcium hydroxide, magnesium hydroxide, aluminum hydroxide, magnesium carbonate basic, calcium carbonate, magnesium carbonate, zinc carbonate, barium carbonate, dawsonite, hydrotalcite, calcium sulfate, barium sulfate, gypsum fiber, potassium salt, clay mineral, glass fiber, glass beads, aluminum nitride, boron nitride, carbon black, graphite, carbon fiber, carbon balloon, charcoal powder, metal powder, potassium titanate, magnesium sulfate, lead zirconate titanate, aluminum borate, molybdenum sulfide, stainless steel fiber, zinc borate, magnetic powder, slag fiber, fly ash, silica-alumina fiber, alumina fiber, silica fiber, and zirconia fiber.

From the viewpoint of further enhancing the flame retardancy and the impact resistance, the inorganic filler is preferably talc, mica, or montmorillonite, and more preferably talc.

The talc may be compressed talc. When the talc is compressed talc, the resin composition can be easily processed.

The inorganic filler may have been subjected to surface treatment such as silanization treatment, plasma treatment, and ashing treatment. When the inorganic filler is an inorganic filler having been subjected to surface treatment such as silanization treatment, the compatibility with the aromatic polycarbonate resin becomes better. The silanized inorganic filler is not included in the silicon-containing particles.

From the viewpoint of further improving the flame retardancy and the impact resistance, the volume average particle diameter (D50) of the inorganic filler is preferably 1 μm or more and more preferably 1.5 μm or more, and preferably 6 μm or less and more preferably 5 μm or less. When the volume average particle diameter (D50) of the inorganic filler is not more than the above upper limit, a molded article having a small distance of the center of gravity between adjacent inorganic fillers and a large number of particles of the inorganic filler can be obtained. A molded article having a small distance of the center of gravity between adjacent inorganic fillers and a large number of particles of the inorganic filler is further improved in flame retardancy and gas barrier property. When the distance between the centers

of gravity of adjacent inorganic fillers is small and the number of particles of the inorganic filler is large, even if the molded article burns, the amount of oxygen flowing into the gaps between the inorganic filler particles can be reduced and the emission of flammable gas generated during combustion can be suppressed. Further, a molded article having a small distance of the center of gravity between adjacent inorganic fillers and a large number of particles of the inorganic filler tends to have superior impact resistance.

The volume average particle diameter of the inorganic filler is an average diameter measured on a volume basis and is a value of a median diameter (D50) with 50%. The volume average particle diameter (D50) can be measured by a laser diffraction/scattering method, an image analysis method, a Coulter method, a centrifugal sedimentation method, etc. The volume average particle diameter (D50) of the inorganic filler is preferably determined by measurement using a laser diffraction/scattering method.

The content of the inorganic filler in 100% by weight of the resin composition is preferably 8% by weight or more and more preferably 12% by weight or more, and preferably 25% by weight or less and more preferably 20% by weight or less. When the content of the inorganic filler is equal to or more than the above lower limit, flame retardancy can be further improved. When the content of the inorganic filler is equal to or less than the above upper limit, the impact resistance can be further improved.

The content of the inorganic filler per 100 parts by weight of the aromatic polycarbonate resin is preferably 10 parts by weight or more and more preferably 15 parts by weight or more, and preferably 40 parts by weight or less and more preferably 30 parts by weight or less. When the content of the inorganic filler is equal to or more than the above lower limit, the flame retardancy can be further enhanced. When the content of the inorganic filler is equal to or less than the above upper limit, the impact resistance can be further enhanced.

The content of the inorganic filler per 100 parts by weight in total of the content of the aromatic polycarbonate resin and the content of the sulfone resin is preferably 10 parts by weight or more and more preferably 13 parts by weight or more, and preferably 40 parts by weight or less and more preferably 30 parts by weight or less. When the content of the inorganic filler is equal to or more than the above lower limit, the flame retardancy can be further enhanced. When the content of the inorganic filler is equal to or less than the above upper limit, the impact resistance can be further enhanced.

[Phosphorus-containing compound]

The resin composition according to the present invention contains a phosphorus-containing compound. The phosphorus-containing compound is a compound having a phosphorus atom. When the resin composition contains the phosphorus-containing compound, the shapeability and the flame retardancy can be enhanced. When the resin composition does not contain the phosphorus-containing compound, the shapeability is lowered or the flame retardancy is lowered. Only one kind of the phosphorus-containing compound may be used or two or more kinds thereof may be used in combination.

From the viewpoint of further enhancing the flame retardancy, the phosphorus-containing compound is preferably a phosphorus-based flame retardant.

The phosphorus-containing compound may be a phosphorus-containing compound having a halogen atom, or may be a phosphorus-containing compound having no halogen atom, or may be a mixture of a phosphorus-containing compound having no halogen atom and a phosphorus-containing compound having a halogen atom.

The phosphorus-containing compound may be any compound containing a phosphorus atom, and may be a compound derived from resorcinol, hydroquinone, bisphenol A, diphenylphenol, or the like.

Examples of the phosphorus-containing compound include phosphoric acid monomer, phosphoric acid oligomer, phosphonate esters, organophosphites, phosphonates, phosphonate amines, phosphates, phosphazenes, and phosphate esters.

From the viewpoint of further enhancing the flame retardancy, the phosphorus-containing compound is preferably a phosphate ester. The phosphate ester is a compound having a phosphate ester structure.

The phosphate ester may be a phosphoric acid monoester, a phosphoric acid diester, or a phosphoric acid triester.

Examples of the phosphate ester include tributyl phosphate, triphenyl phosphate, tricresyl phosphate, diphenyl cresyl phosphate, diphenyl octyl phosphate, diphenyl-2-ethylcresyl phosphate, tri- (isopropylphenyl) phosphate, resorcinol-crosslinked diphosphate, and bisphenol A-crosslinked diphosphate. The phosphate ester is preferably an oligomeric phosphate ester derived from bisphenol A.

The content of the phosphorus-containing compound in 100% by weight of the resin composition is preferably 2% by weight or more and more preferably 4% by weight or more, and preferably 18% by weight or less and more preferably 15% by weight or less. When the content of the phosphorus-containing compound is equal to or more than the above lower limit, the shapeability and flame retardancy can be further improved. When the content of the phosphorus-containing compound is equal to or less than the above upper limit, the impact resistance can be further improved.

The content of the phosphorus-containing compound per 100 parts by weight of the aromatic polycarbonate resin is preferably 3 parts by weight or more, more preferably 5 parts by weight or more, and even more preferably 7 parts by weight or more, and preferably 25 parts by weight or less and more preferably 20 parts by weight or less. When the content of the phosphorus-containing compound is equal to or more than the above lower limit, the shapeability and the flame retardancy can be further enhanced. When the content of the phosphorus-containing compound is equal to or less than the above upper limit, the impact resistance can be further enhanced.

The content of the phosphorus-containing compound per 100 parts by weight in total of the content of the aromatic polycarbonate resin and the content of the sulfone resin is preferably 5 parts by weight or more and more preferably 7 parts by weight or more, and preferably 16 parts by weight or less and more preferably 15 parts by weight or less. When the content of the phosphorus-containing compound is equal to or more than the above lower limit, the shapeability and the flame retardancy can be further enhanced. When the content of the phosphorus-containing compound is equal to or less than the above upper limit, the impact resistance can be further enhanced.

[Silicon-containing substance]

The resin composition according to the present invention contains a silicon-containing compound or silicon-containing particles. The resin composition according to the present invention contains a silicon-containing substance. The silicon-containing substance is a silicon-containing compound or silicon-containing particles. When the resin composition contains the silicon-containing substance, the flame retardancy can be enhanced. When the resin composition does not contain the silicon-containing substance, the flame retardancy may be inferior. Only one kind of the silicon-containing compound may be used or two or more kinds thereof may be used in combination.

The silicon-containing compound is a compound having a silicon atom. The silicon-containing particles are particles having a silicon atom. The resin composition according to the present invention may contain the silicon-containing compound, may contain the silicon-containing particles, or may contain both the silicon-containing compound and the silicon-containing particles. Examples of the silicon-containing substance include silica, calcium silicate, silica-based balloons, silicon nitride, silicon carbide, silicone-based flame retardants, and core-shell particles containing a silicon atom.

Silicon-containing compound:

From the viewpoint of further enhancing the flame retardancy, the silicon-containing compound is preferably a silicone-based flame retardant, and preferably a polyorganosiloxane.

From the viewpoint of further enhancing the flame retardancy, the polyorganosiloxane preferably has an aromatic skeleton. Examples of the polyorganosiloxane having an aromatic skeleton include polydiphenylsiloxane, polymethylphenylsiloxane, polydimethyldiphenylsiloxane, and cyclic siloxane having a phenyl group.

The polyorganosiloxane may have a functional group such as a silanol group, an epoxy group, an alkoxy group, a hydrosilyl group, and a vinyl group. When the polyorganosiloxane has such a functional group, the compatibility between the polyorganosiloxane and the aromatic polycarbonate resin can be improved or the reactivity at the time of combustion can be improved, and as a result, the flame retardancy can be enhanced.

When the polyorganosiloxane has the silanol group, the content of the silanol group in 100% by weight of the polyorganosiloxane is preferably 1% by weight or more, more preferably 2% by weight or more, even more preferably 3% by weight or more, and particularly preferably 5% by weight or more. When the polyorganosiloxane has the silanol group, the content of the silanol group in 100% by weight of the polyorganosiloxane is preferably 10% by weight or less, more preferably 9% by weight or less, even more preferably 8% by weight or less, and particularly preferably 7.5% by weight or less. When the content of the silanol group is in the range from the above lower limit to the above upper limit, the flame retardancy can be further enhanced. When the content of the silanol group exceeds 10% by weight, the thermal stability and the moist heat stability of the resin composition may be lower than those in the case where the content of the silanol group is 10% by weight or less.

When the polyorganosiloxane has the alkoxy group, the content of the alkoxy group in 100% by weight of the polyorganosiloxane is preferably 10% by weight or less. When the content of the alkoxy group is equal to or less than the above upper limit, the flame retardancy can be further enhanced. When the content of the alkoxy group exceeds 10% by weight, the resin composition may more easily gelate as compared with the case where the content is 10% by weight or less.

The molecular weights of the silicon-containing compound and the polyorganosiloxane are preferably 450 or more, more preferably 1,000 or more, even more preferably 1,500 or more, and particularly preferably 1,700 or more, and preferably 300,000 or less, more preferably 100,000 or less, even more preferably 20,000 or less, and particularly preferably 15,000 or less. When the molecular weights of the silicon-containing compound and the polyorganosiloxane are equal to or more than the above lower limit, the heat resistance of the silicon-containing compound and the polyorganosiloxane can be enhanced. When the molecular weights of the silicon-containing compound and the polyorganosiloxane are equal to or less than the above upper limit, the stability of the resin composition can be enhanced, the dispersibility of the silicon-containing compound and the polyorganosiloxane in the resin composition can be improved,

and the flame retardancy can be enhanced.

When the silicon-containing compound and the polyorganosiloxane are not polymers and when the structural formulas of the silicon-containing compound and the polyorganosiloxane can be specified, the molecular weights of the silicon-containing compound and the polyorganosiloxane mean the molecular weights that can be calculated from the structural formulas. When the silicon-containing compound and the polyorganosiloxane are polymers, the molecular weights of the silicon-containing compound and the polyorganosiloxane are weight average molecular weights in terms of polystyrene measured by gel permeation chromatography (GPC).

The content of the silicon-containing compound in 100% by weight of the resin composition is preferably 1% by weight or more and more preferably 2% by weight or more, and preferably 15% by weight or less and more preferably 12% by weight or less. When the content of the silicon-containing compound is equal to or more than the above lower limit, the flame retardancy can be further improved. When the content of the silicon-containing compound is equal to or less than the above upper limit, the impact resistance can be further improved.

The content of the silicon-containing compound per 100 parts by weight of the aromatic polycarbonate resin is preferably 2 parts by weight or more and more preferably 4 parts by weight or more, and preferably 20 parts by weight or less and more preferably 15 parts by weight or less. When the content of the silicon-containing compound is equal to or more than the above lower limit, the flame retardancy can be further enhanced. When the content of the silicon-containing compound is equal to or less than the above upper limit, the impact resistance can be further enhanced.

The content of the silicon-containing compound per 100 parts by weight in total of the content of the aromatic polycarbonate resin and the content of the sulfone resin is preferably 2 parts by weight or more and more preferably 3 parts by weight or more, and preferably 20 parts by weight or less and more preferably 16 parts by weight or less. When the content of the silicon-containing compound is equal to or more than the above lower limit, the flame retardancy can be further enhanced. When the content of the silicon-containing compound is equal to or less than the above upper limit, the impact resistance can be further enhanced.

Silicon-containing particles:

The silicon-containing particles are preferably core-shell particles each including a core and a shell disposed on a surface of the core. That is, the resin composition preferably contains core-shell particles each including a core and a shell disposed on a surface of the core. It is also preferable that the silicon-containing compound be contained as the core-shell particles in the resin composition. The core-shell particles may have a silicon atom in the core, or may have a silicon atom in the shell. When the resin composition contains core-shell particles as silicon-containing particles, the flame retardancy can be enhanced and the impact resistance can also be enhanced.

From the viewpoint of further enhancing the flame retardancy, it is preferable that the organic compound constituting the core and the organic compound constituting the shell be chemically bonded in the core-shell particles. The chemical bond is preferably a graft bond.

Examples of the core-shell particles include silicone-based core-shell type rubbery polymers such as silicone-acrylate-methyl methacrylate copolymer and silicone-acrylate-acrylonitrile-styrene copolymer. The core-shell particles preferably have a core-shell rubber structure.

From the viewpoint of improving the appearance of the molded article and further enhancing the impact resistance, the volume average particle diameter (D50) of the silicon-containing particles or the core-shell particles is preferably 100 nm or more and more preferably 250 nm or more, and preferably 800 nm or less. Core-shell particles having a volume average particle diameter (D50) in the range from the above lower limit to the above upper limit can be produced by an emulsion polymerization method.

The volume average particle diameter of the silicon-containing particles or the core-shell particles is an average diameter measured on a volume basis, and is a value of a median diameter (D50) with 50%. The volume average particle diameter (D50) can be measured by a laser diffraction/scattering method, an image analysis method, a Coulter method, a centrifugal sedimentation method, etc. The volume average particle diameter (D50) of the silicon-containing particles or the core-shell particles is preferably determined by measurement using a laser diffraction/scattering method.

Commercially available products can also be used as the core-shell particles. Examples of commercially available products of the core-shell particles include METABLEN S-2001, S-2006, S-2501, S-2030, S-2100, S-2200, SRK200A, SX-005, and SX-006 (all manufactured by Mitsubishi Rayon Co., Ltd.).

The content of the silicon-containing particles in 100% by weight of the resin composition is preferably 1% by weight or more and more preferably 2% by weight or more, and preferably 15% by weight or less and more preferably 12% by weight or less. When the content of the silicon-containing particles is equal to or more than the above lower limit, the flame retardancy can be further enhanced. When the content of the silicon-containing particles is equal to or less than the above upper limit, the impact resistance can be further enhanced.

The content of the silicon-containing particles per 100 parts by weight of the aromatic polycarbonate resin is preferably 2 parts by weight or more and more preferably 4 parts by weight or more, and preferably 20 parts by weight or less and more preferably 15 parts by weight or less. When the content of the silicon-containing particles is equal to or more than the above lower limit, the flame retardancy can be further enhanced. When the content of the silicon-containing particles is equal to or less than the above upper limit, the impact resistance can be further enhanced.

The content of the silicon-containing particles per 100 parts by weight in total of the content of the aromatic polycarbonate resin and the content of the sulfone resin is preferably 2 parts by weight or more and more preferably 3 parts by weight or more, and preferably 20 parts by weight or less and more preferably 16 parts by weight or less. When the content of the silicon-containing particles is equal to or more than the above lower limit, the flame retardancy can be further enhanced. When the content of the silicon-containing particles is equal to or less than the above upper limit, the impact resistance can be further enhanced.

The total of the content of the silicon-containing compound and the content of the silicon-containing particles (the content of the silicon-containing substance) in 100% by weight of the resin composition is preferably 1% by weight or more and more preferably 2% by weight or more, and preferably 15% by weight or less and more preferably 12% by weight or less. When the total content is equal to or more than the above lower limit, the flame retardancy can be further enhanced. When the total content is equal to or less than the above upper limit, the impact resistance can be further improved.

The total of the content of the silicon-containing compound and the content of the silicon-containing particles (the content of the silicon-containing substance) per 100 parts by weight of the content of the aromatic polycarbonate resin is preferably 2 parts by weight or more and more preferably 4 parts by weight or more, and preferably 20 parts by weight or less and more preferably 15 parts by weight or less. When the total content is equal to or more than the above lower limit, the flame retardancy can be further enhanced. When the total content is equal to or less than the above upper limit, the impact resistance can be further improved.

The total of the content of the silicon-containing compound and the content of the silicon-containing particles (the content of the silicon-containing substance) per 100 parts by weight in total of the content of the aromatic polycarbonate resin and the content of the sulfone resin is preferably 2 parts by weight or more and more preferably 3 parts by weight or more, and preferably 20 parts by weight or less and more preferably 16 parts by weight or less. When the total content is equal to or more than the above lower limit, the flame retardancy can be further enhanced. When the total content is equal to or less than the above upper limit, the impact resistance can be further improved.

[Fluororesin]

The resin composition according to the present invention preferably contains a fluororesin. When the resin composition contains the fluororesin, the flame retardancy can be further enhanced. Only one kind of the fluororesin may be used or two or more kinds thereof may be used in combination.

Examples of the fluororesin include a homopolymer having a fluorinated alpha-olefin monomer as a structural unit and a copolymer containing a fluorinated alpha-olefin monomer as a structural unit.

The fluorinated alpha-olefin monomer is an alpha-olefin monomer containing a substituent having at least one fluorine atom.

Examples of the fluorinated alpha-olefin monomer include tetrafluoroethylene ($CF_2=CF_2$), $CHF=CF_2$, vinylidene fluoride ($CH_2=CF_2$), $CH_2=CHF$, chlorotrifluoroethylene ($CClF=CF_2$), $CCl_2=CF_2$, $CClF=CClF$, $CHF=CCl_2$, $CH_2=CClF$, $CCl_2=CClF$, hexafluoropropylene ($CF_2=CFCF_3$), $CF_3CF=CHF$, $CF_3CH=CF_2$, $CF_3CH=CH_2$, $CF_3CF=CHF$, $CHF_2CH=CHF$, and $CF_3CH=CH_2$.

Examples of the fluororesin include poly(tetrafluoroethylene) homopolymer (PTFE), poly(hexafluoroethylene), poly(tetrafluoroethylene-hexafluoroethylene), and poly(tetrafluoroethylene-ethylenepropylene). The poly(tetrafluoroethylene) homopolymer (PTFE) may be fiber-forming or non-fiber-forming.

The content of the fluororesin in 100% by weight of the resin composition is preferably 0.01% by weight or more and more preferably 0.1% by weight or more, and preferably 1.5% by weight or less and more preferably 1% by weight or less. When the content of the fluororesin is equal to or more than the above lower limit, the flame retardancy can be further enhanced. When the content of the fluororesin is equal to or less than the above upper limit, the impact resistance can be further improved.

The content of the fluororesin per 100 parts by weight of the aromatic polycarbonate resin is preferably 0.3 parts by weight or more and more preferably 0.5 parts by weight or more, and preferably 2 parts by weight or less and more preferably 1.5 parts by weight or less. When the content of the fluororesin is equal to or more than the above lower limit, the flame retardancy can be further enhanced. When the content of the fluororesin is equal to or less than the above upper limit, the impact resistance can be further improved.

The content of the fluororesin per 100 parts by weight in total of the content of the aromatic polycarbonate resin and the content of the sulfone resin is preferably 0.5 parts by weight or more and more preferably 0.6 parts by weight or more, and preferably 2 parts by weight or less and more preferably 1.5 parts by weight or less. When the content of the fluororesin is equal to or more than the above lower limit, the flame retardancy can be further enhanced. When the content of the fluororesin is equal to or less than the above upper limit, the impact resistance can be further improved.

[Other components]

The resin composition may contain other components as long as the object of the present invention is not impaired.

Examples of the other components include dripping inhibitors, antioxidants, heat stabilizers, light stabilizers, UV absorbers, colorants, plasticizers, lubricants, mold release agents, and reinforcing agents. As for each of the other components, only one kind thereof may be used or two or more kinds thereof may be used in combination.

When the resin composition contains the other components, the content of the other components per 100 parts by weight of the aromatic polycarbonate resin is not particularly limited, but for example, the content of the other components is preferably 0.01 parts by weight or more, more preferably 0.1 parts by weight or more, and even more preferably 0.5 parts by weight or more, and preferably 10 parts by weight or less and more preferably 5 parts by weight or less.

Examples of the antioxidant include alkylated monophenols; alkylated polyphenols; alkylation reaction products of polyphenols with dienes such as tetrakis[methylene(3,5-di-tert-butyl-4-hydroxyhydrocinnamete)]methane; butylation reaction products of para-cresol or dicyclopentadiene; alkylated hydroquinones; hydroxylated thiodiphenyl ether; alkylidene-bisphenols; benzyl compounds; esters of beta-(3,5-di-tert-butyl-4-hydroxyphenyl)propionic acid with a monohydric or polyhydric alcohol; esters of beta-(5-tert-butyl-4-hydroxy-3-methylphenyl)propionic acid with a monohydric or polyhydric alcohol; esters of thioalkyl compounds or thioaryl compounds such as distearyl thiopropionate, dilauryl thiopropionate, ditridecyl thiodipropionate, octadecyl-3-(3,5-di-tert-butyl-4-hydroxyphenyl)propionate, and pentaerythrityl-tetrakis[3-(3,5-di-tert-butyl-4-hydroxyphenyl)propionate; and amide compounds of beta-(3,5-di-tert-butyl-4-hydroxyphenyl)propionic acid.

When the resin composition contains the antioxidant, the content of the antioxidant per 100 parts by weight of the aromatic polycarbonate resin is preferably 0.01 parts by weight or more and preferably 0.1 parts by weight or less.

Examples of the light stabilizer include benzotriazoles such as 2-(2-hydroxy-5-methylphenyl)benzotriazole and 2-(2-hydroxy-5-tert-octylphenyl)-benzotriazole; and 2-hydroxy-4-n-octoxybenzophenone.

When the resin composition contains the light stabilizer, the content of the light stabilizer per 100 parts by weight of the aromatic polycarbonate resin is preferably 0.01 parts by weight or more and preferably 5 parts by weight or less.

Examples of the UV absorber include hydroxybenzophenone; hydroxybenzotriazole; hydroxybenzotriazine; cyanoacrylate; oxanilide; benzooxadinone; 2-(2H-benzotriazol-2-yl)-4-(1,1,3,3-tetramethylbutyl)-phenol; 2-hydroxy-4-n-octyloxybenzophenone; 2-[4,6-bis(2,4-dimethylphenyl)-1,3,5-triazin-2-yl]-5-(octyloxy)-phenol; 2,2'-(1,4-phenylene)bis(4H-3,1-benzoxazin-4-one); 1,3-bis[(2-cyano-3,3-diphenylacryloyl)oxy]-2,2-bis[[(2-cyano-3,3-diphenylacryloyl)oxy]methyl]propane; 2,2'-(1,4-phenylene)bis(4H-3,1-benzoxazin-4-one); 1,3-bis[(2-cyano-3,3-diphenylacryloyl)oxy]-2,2-bis[[(2-cyano-3,3-diphenylacryloyl))oxy]methyl]propane; and inorganic substances having an average particle diameter of 100 nm or less such as cerium oxide and zinc oxide.

When the resin composition contains the UV absorber, the content of the UV absorber per 100 parts by weight of the aromatic polycarbonate resin is preferably 0.01 parts by weight or more and preferably 5 parts by weight or less.

Examples of the colorant include titanium dioxide, carbon black, and organic dyes.

As the plasticizer, the lubricant, or the mold release agent, only one kind thereof may be used or two or more kinds thereof may be used in combination. Many of the compounds to be used as plasticizers also have the properties as lubricants or template agents, and many of the compounds to be used as lubricants also have the properties of template agents or plasticizers, and many of the compounds to be used as template agents also have the properties of plasticizers or lubricants.

Examples of the plasticizer, lubricant, or mold release agent include phthalate esters such as dioctyl-4,5-epoxyhexahydrophthalate; tris-(octoxycarbonylethyl) isocyanurate; tristearin; poly-alpha-olefin; epoxidized soybean oil; esters; fatty acid esters such as alkyl stearates; stearates such as methyl stearate, stearyl stearate, and pentaerythritol tetrastearate; mixtures of methyl stearate and hydrophilic and hydrophobic nonionic surfactants such as polyethylene glycol copolymer, polypropylene glycol copolymer, and poly(ethylene glycol-co-propylene glycol) copolymer; mixtures of methyl stearate and a polyethylene-polypropylene glycol copolymer; and waxes such as bees wax, montan wax, and paraffin wax.

When the resin composition contains the plasticizer, the lubricant, or the mold release agent, each of the contents of the plasticizer, the lubricant, and the mold release agent per 100 parts by weight of the aromatic polycarbonate resin is preferably 0.1 parts by weight or more and preferably 1 part by weight or less.

Examples of the reinforcing agent include fibrous reinforcing agents such as glass fiber.

When the resin composition contains the reinforcing agent, the content of the reinforcing agent per 100 parts by weight of the aromatic polycarbonate resin is preferably 1 part by weight or more and more preferably 10 parts by weight or more, and preferably 25 parts by weight and more preferably 20 parts by weight or less.

The relative amount of each component of the other components has an important effect on low smoke concentration, low smoke toxicity, and mechanical properties such as ductility of the molded article. Even if a large amount of a certain component is blended in order to improve a certain property of the molded article, other properties may be

deteriorated.

(Other details of resin composition and molded article)

The molded article according to the present invention is a molded article obtainable by molding the aforementioned resin composition. A molded article can be obtained by molding the resin composition according to the present invention. This molded article is superior in flame retardancy and impact resistance. Further, since the resin composition according to the present invention is superior in shapeability, the resulting molded article is less likely to be cracked or fractured. As a result, the resulting molded article has a good appearance.
The molded article according to the present invention can be molded by a known method using the above-described resin composition. For example, a molded article can be obtained by heating the resin composition at 230°C to 300°C for molding and curing. Further, by vacuum forming the obtained molded article, a molded article having a prescribed shape can be obtained.
Since the resin composition according to the present invention is superior in shapeability, molded articles varying in shape can be obtained. For example, the molded article according to the present invention may have a rectangular shape, a shape with a curved surface, a shape with irregularities, or a sheet form.
The resin composition according to the present invention is preferably used for vacuum forming. The resin composition according to the present invention may not be used for vacuum forming.
The molded article is preferably in a sheet form. The molded article in a sheet form is a resin sheet. The resin sheet can be produced, for example, by extruding a resin composition into a sheet form.
The resin sheet may be further transformed by vacuum forming or the like. By vacuum forming the extruded resin sheet, a resin sheet having a desired shape can be obtained. Since the resin composition according to the present invention is superior in shapeability, a molded article having a desired shape can be satisfactorily produced. For example, the resin sheet may be a resin sheet having a curved surface or a resin sheet with irregularities.
The molded article according to the present invention may be a vacuum-formed molded article, a molded article before being vacuum-formed, or a molded article that has not been vacuum-formed.
In the molded article, the average maximum heat generation rate measured in accordance with ISO5660-1 at an amount of heat radiated from a heater of 50 kW/m$^2$ with ignition is preferably 130 kW/m$^2$ or less, more preferably 125 kW/m$^2$ or less, and even more preferably 120 kW/m$^2$ or less. When the average maximum heat generation rate is equal to or less than the above upper limit, the flame retardancy can be further improved. In order to further enhance the flame retardancy, the lower the average maximum heat generation rate is, the better.
Specifically, the average maximum heat generation rate is measured as follows.
The molded article is cut or the like to afford a sample for heat generation rate measurement having a length of 100 mm, a width of 100 mm, and a thickness of 3 mm. For the obtained sample for heat generation rate measurement, measurement is performed in accordance with ISO5660-1 using a cone calorimeter tester at an amount of heat radiated from a heater of 50 kW/m$^2$ with ignition, and the heat generation rate is measured. When the thickness of the molded article is less than 3 mm, a sample for heat generation rate measurement having a thickness of 3 mm may be produced using the material (resin composition) of the molded article.
The average maximum heat generation rate is a value calculated in accordance with EN45545-2 using the heat generation rate measured in accordance with ISO5660-1.
From the heat generation rate (q) measured in accordance with ISO5660-1 and the measurement time (T) when measuring the heat generation rate, the average heat generation rate is calculated by the following formula.

[Formula 1]

$$\text{Average heat generation rate} = \frac{\sum_{2}^{n}\left\{\left(T_n - T_{n-1}\right) \times \left(q_n + q_{n-1}\right)/2\right\}}{T_n - T_1}$$

n means the number of measured plots at every 2 seconds. n is preferably an integer of 3 or more.
The average heat generation rate is calculated for each of the plurality of samples for measuring the heat generation rate, and the maximum value of the obtained average heat generation rates is defined as the average maximum heat generation rate. The average maximum heat generation rate is preferably a value calculated using three

or more samples for heat generation rate measurement.

Since the molded article is superior in flame retardancy and impact resistance, it is preferably an interior material for a transport carrier. Examples of the transport carrier include railway vehicles, aircrafts, ships, and automobiles. Examples of the interior material include ceilings, window frames, armrests, backrests, and tables. The molded article is preferably an interior material for a railway vehicle, preferably an interior material for an aircraft, preferably an interior material for a ship, and preferably an interior material for an automobile. Since the resin composition according to the present invention is superior in shapeability, it can be easily molded into a shape required as an interior material for a transport carrier.

Hereinafter, the present invention will be specifically described with reference to examples and comparative examples. The present invention is not limited to the following examples.

The following materials were prepared.

(Aromatic polycarbonate resin)

Aromatic polycarbonate resin (aromatic polycarbonate resin having a structural unit derived from a bisphenol A type compound, "IUPILON E Series" manufactured by Mitsubishi Gas Chemical Co., Ltd., viscosity average molecular weight: 20000)

(Sulfone resin)

Polyphenylsulfone resin ("Radel 5000" manufactured by Solvay)

(Phosphorus-containing compound)

Phosphate ester ("Fyrol Flex Sol DP" produced by ICL JAPAN Ltd.)

(Silicon-containing substance)

Silicone/acrylic core-shell rubber ("METABLEN SX-005" manufactured by Mitsubishi Rayon Co., Ltd.)

(Inorganic filler)

Talc ("Jet Fine 3CA" manufactured by Imerys Specialties, volume average particle diameter: 4.8 μm)

The volume average particle diameter (D50) of talc was determined by measuring particle size distribution using a laser diffraction particle size distribution analyzer ("SALD-3100" manufactured by Shimadzu Corporation). Specifically, in the determined particle size distribution, the particle size at which the cumulative volume calculated from the smaller diameter side is 50% was defined as the volume average particle diameter (D50) of talc.

(Fluororesin)

Polytetrafluoroethylene ("Teflon CFP6000" manufactured by DuPont)

(Example 1)

Preparation of resin composition:

Using a twin-screw extruder ("TEX30a" manufactured by The Japan Steel Works, Ltd.), a mixture blended in the blending amounts (parts by weight) shown in Table 1 was melt-kneaded under the condition specified by a cylinder temperature of 280°C, a mold temperature of 260°C, a pressure of 0.7 bar (vacuum), a screw diameter of 30 mm, a rotation speed of 400 rpm, and an extrusion rate of 15 kg/hour, followed by melt-extrusion. The resin composition resulting from the melt-extrusion was cooled by a water cooling system, cut into pellets using a pelletizer, and then dried at about 120°C for about 5 hours, affording a pelletized resin composition.

Preparation of molded article:

Using a single-screw extruder ("GT50" manufactured by Research Laboratory of Plastics Technology Co., Ltd.), the pelletized resin composition was melted under the condition specified by a cylinder temperature of 270°C, a mold temperature of 290°C, and an extrusion rate of 20 kg/hour, and then extruded into a sheet form. Next, the extruder was hauled with the ratio of the hauling speed to the roll speed in a hauling machine (hauling speed/roll speed) set at 1.05, affording a resin sheet (molded article) having a thickness of 3 mm.

(Examples 2 to 15 and Comparative Examples 1 to 4)

Resin compositions and molded articles were obtained in the same manner as in Example 1 except that the blending amount (parts by weight) of each component was changed as shown in Tables 1 to 4 below.

(Evaluation)

(1) Shapeability

A resin sheet obtained was cut into a length of 300 mm, a width of 300 mm, and a thickness of 3 mm to afford a specimen. A tensile test was conducted in accordance with JIS K7161-2: 2014 with the obtained specimen heated at 190°C, and the elongation at break of the specimen was evaluated.

[Judgment criteria for shapeability]

○: Elongation at break is 200% or more.
△: Elongation at break is 100% or more and less than 200%.
△△: Elongation at break is 80% or more and less than 100%.
×: Elongation at break is less than 80%.

(2) Flame retardancy (average maximum heat generation rate)

The obtained resin sheet was cut into 100 mm in length × 100 mm in width × 3 mm in thickness to afford a sample for heat generation rate measurement. For the obtained sample for heat generation rate measurement, measurement was performed in accordance with ISO5660-1 using a cone calorimeter tester at an amount of heat radiated from a heater of 50 $kW/m^2$ for a measurement time of 20 minutes with ignition, and the heat generation rate was measured.

From the measured heat generation rate, the average maximum heat generation rate was calculated in accordance with EN45545-2. In this evaluation, n in the formula of the above-mentioned average heat generation rate was set to 600.

[Judgment criteria for average maximum heat generation rate]

○: less than 120 $kW/m^2$.
△: 120 $kW/m^2$ or more and 130 $kW/m^2$ or less.
×: more than 130 $kW/m^2$.

(3) Impact resistance (dart impact strength)

The obtained resin sheet was cut into 45 mm in length × 45 mm in width × 3 mm in thickness to afford a sample for impact strength measurement. The obtained sample for impact strength measurement was measured in accordance with ASTM D 5420 (GE method), so that the impact energy was measured. Specifically, using a Gardner impact tester (manufactured by BYK) and using an object with a weight of 16 lb and a pin tip shape GE type, an impact was given to the sample for impact strength measurement, and the impact energy with which no cracks were generated in the sample for impact strength measurement was measured.

[Judgment criteria for dart impact strength]

○: Impact energy is 300 in-lb or more.
△: Impact energy is 190 in-lb or more and less than 300 in-lb.
×: Impact energy is less than 190 in-lb.

(4) Comprehensive judgment

The obtained molded articles were evaluated on the basis of (1) the result of the shapeability evaluation, (2) the result of flame retardancy (average maximum heat generation rate) evaluation, and (3) the result of impact resistance (dart impact strength) evaluation.

[Evaluation criteria for comprehensive judgment]

○: All the evaluation results of the above (1), (2) and (3) are ○.
△: The evaluation results of the above (1), (2) and (3) include neither △△ nor ×, and include △.
△△: The evaluation results of the above (1), (2) and (3) do not include ×, but include △△.
×: The evaluation results of the above (1), (2) and (3) include ×.

The compositions and results are shown in the following Tables 1 to 4.

[Table 1]

| | | | Example 1 | Example 2 | Example 3 | Example 4 | Example 5 |
|---|---|---|---|---|---|---|---|
| Aromatic polycarbonate resin | | Parts by weight | 90 | 90 | 90 | 90 | 90 |
| Sulfone resin | Polyphenylsulfone resin | Parts by weight | 10 | 10 | 10 | 10 | 10 |
| Phosphorus-containing compound | Phosphate ester | Parts by weight | 5 | 8 | 10 | 12 | 15 |
| Silicon -containing substance | Silicone/acrylic core-shell rubber | Parts by weight | 7 | 7 | 7 | 7 | 7 |
| Inorganic filler | Talc | Parts by weight | 23 | 23 | 23 | 23 | 23 |
| Fluororesin | Polytetrafluoroethylene | Parts by weight | 0.6 | 0.6 | 0.6 | 0.6 | 0.6 |
| Weight ratio (the content of sulfone resin / the content of phosphoric acid-containing compound) | | - | 2.0 | 1.3 | 1.0 | 0.8 | 0.7 |
| Evaluation | Shapeability | % | > 200 | > 200 | > 200 | > 200 | > 200 |
| | | - | ○ | ○ | ○ | ○ | ○ |
| | Flame retardancy (average maximum heat generation rate) | $kW/m^2$ | 124 | 121 | 115 | 117 | 115 |
| | | Judgment | △ | △ | ○ | ○ | ○ |
| | Impact resistance (dart impact strength) | in-lb | 352 | 352 | 336 | 352 | 304 |
| | | Judgment | ○ | ○ | ○ | o | o |
| | Comprehensive judgment | Judgment | △ | △ | ○ | ○ | ○ |

[Table 2]

| | | | Example 6 | Example 7 | Example 8 | Example 9 | Example 10 |
|---|---|---|---|---|---|---|---|
| Aromatic polycarbonate resin | | Parts by weight | 80 | 80 | 80 | 80 | 80 |
| Sulfone resin | Polyphenylsulfone resin | Parts by weight | 20 | 20 | 20 | 20 | 20 |
| Phosphorus-containing compound | Phosphate ester | Parts by weight | 5 | 8 | 10 | 12 | 15 |
| Silicon-containing substance | Silicone/acrylic core-shell rubber | Parts by weight | 7 | 7 | 7 | 7 | 7 |
| Inorganic filler | Talc | Parts by weigh t | 23 | 23 | 23 | 23 | 23 |
| Fluororesin | Polytetrafluoroethylene | Parts by weight | 0.6 | 0.6 | 0.6 | 0.6 | 0.6 |
| Weight ratio (the content of sulfone resin / the content of phosphoric acid-containing compound) | | - | 4.0 | 2.5 | 2.0 | 1.7 | 1.3 |
| Evaluation | Shapeability | % | 178 | > 200 | > 200 | > 200 | > 200 |
| | | - | △ | ○ | ○ | ○ | ○ |
| | Flame retardancy (average maximum heat generation rate) | $kW/m^2$ | 116 | 110 | 119 | 118 | 120 |
| | | Judgment | ○ | ○ | ○ | ○ | △ |
| | Impact resistance (dart impact strength) | in-lb | 320 | 304 | 288 | 256 | 256 |
| | | Judgment | ○ | ○ | △ | △ | △ |
| | Comprehensive judgment | Judgment | △ | ○ | △ | △ | △ |

[Table 3]

| | | | Example 11 | Example 12 | Example 13 | Example 14 | Example 15 |
|---|---|---|---|---|---|---|---|
| Aromatic polycarbonate resin | | Parts by weight | 70 | 70 | 70 | 70 | 60 |
| Sulfone resin | Polyphenylsulfone resin | Parts by weight | 30 | 30 | 30 | 30 | 40 |
| Phosphorus-containing compound | Phosphate ester | Parts by weight | 5 | 8 | 12 | 15 | 12 |
| Silicon-containing substance | Silicone/acrylic core-shell rubber | Parts by weight | 7 | 7 | 7 | 7 | 7 |
| Inorganic filler | Talc | Parts by weight | 23 | 23 | 23 | 23 | 23 |
| Fluororesin | Polytetrafluoroethylene | Parts by weight | 0.6 | 0.6 | 0.6 | 0.6 | 0.6 |
| Weight ratio (the content of sulfone resin / the content of phosphoric acid-containing compound) | | - | 6.0 | 3.8 | 2.5 | 2.0 | 3.3 |
| Evaluation | Shapeability | % | 152 | 186 | > 200 | > 200 | 88 |
| | | - | △ | △ | ○ | ○ | △△ |
| | Flame retardancy (average maximum heat generation rate) | $kW/m^2$ | 110 | 108 | 108 | 110 | 99 |
| | | Judgment | ○ | ○ | ○ | ○ | ○ |
| | Impact resistance (dart impact strength) | in-lb | 288 | 262 | 256 | 208 | 192 |
| | | Judgment | △ | △ | △ | △ | △ |
| | Comprehensive judgment | Judgment | △ | △ | △ | △ | △△ |

[Table 4]

| | | | Comparative Example 1 | Comparative Example 2 | Comparative Example 3 | Comparative Example 4 |
|---|---|---|---|---|---|---|
| Aromatic polycarbonate resin | | Parts by weight | 100 | 80 | 80 | 80 |
| Sulfone resin | Polyphenylsulfone resin | Parts by weight | - | 20 | 20 | 20 |
| Phosphorus-containing compound | Phosphate ester | Parts by weight | 5 | - | 5 | 5 |
| Silicon-containing substance | Silicone/acrylic core-shell rubber | Parts by weight | 7 | 7 | - | 7 |
| Inorganic filler | Talc | Parts by weight | 23 | 23 | 23 | - |
| Fluororesin | Polytetrafluoroethylene | Parts by weight | 0.6 | 0.6 | 0.6 | 0.6 |
| Weight ratio (the content of sulfone resin / the content of phosphoric acid-containing compound) | | - | - | - | 4.0 | 4.0 |
| Evaluation | Shapeability | % | > 200 | 83 | > 200 | > 200 |
| | | - | ○ | △△ | ○ | ○ |
| | Flame retardancy (average maximum heat generation rate) | $kW/m^2$ | 135 | 148 | 140 | 179 |
| | | Judgment | × | × | × | × |
| | Impact resistance (dart impact strength) | in-lb | 368 | 336 | 304 | 384 |
| | | Judgment | ○ | ○ | ○ | ○ |
| | Comprehensive judgment | Judgment | × | × | × | × |

The resin sheets (molded articles) obtained in the examples are well elongated even at relatively low temperatures and therefore are understood to be superior in shapeability. Therefore, for example, the resin sheets (molded articles) obtained in the examples can be satisfactorily shaped into various shapes. In addition, the molded articles obtained in Examples can be understood to be superior also in flame retardancy and impact resistance.

In contrast, the resin sheets (molded articles) obtained in Comparative Examples were difficult to improve all of shapeability, flame retardancy and impact resistance at the same time.

## Claims

1. A resin composition comprising an aromatic polycarbonate resin, a sulfone resin having a structure represented by a following formula (1), an inorganic filler, a phosphorus-containing compound, and a silicon-containing compound or silicon-containing particles.

[Chemical 1]

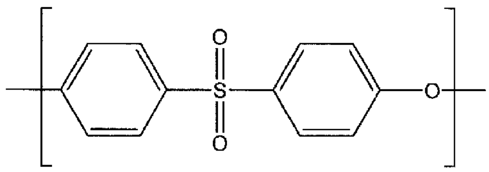

···(1)

2. The resin composition according to claim 1, wherein the sulfone resin is a polyphenylsulfone resin having a structure represented by a following formula (11).

[Chemical 2]

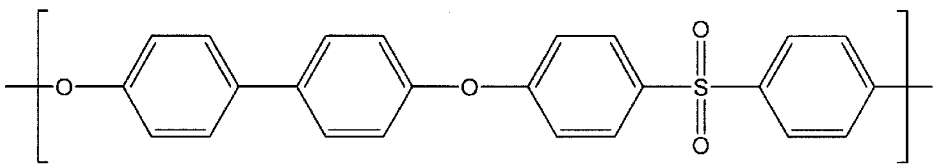

···(11)

3. The resin composition according to claim 1 or 2, wherein a content of the sulfone resin is 5% by weight or more and 35% by weight or less in 100% by weight of a content of the aromatic polycarbonate resin and a content of the sulfone resin in total.

4. The resin composition according to any one of claims 1 to 3, wherein a weight ratio of the content of the sulfone resin to the content of the phosphorus-containing compound is 0.6 or more and 3.5 or less.

5. The resin composition according to any one of claims 1 to 4, wherein the content of the phosphorus-containing compound is 5 parts by weight or more and 16 parts by weight or less per 100 parts by weight of the content of the aromatic polycarbonate resin and the content of the sulfone resin in total.

6. The resin composition according to any one of claims 1 to 5, wherein a content of the inorganic filler is 10 parts by weight or more and 40 parts by weight or less per 100 parts by weight of the content of the aromatic polycarbonate resin and the content of the sulfone resin in total.

7. The resin composition according to any one of claims 1 to 6, wherein the inorganic filler is talc.

8. The resin composition according to any one of claims 1 to 7, wherein a total content of the silicon-containing compound and the silicon-containing particles is 2 parts by weight or more and 20 parts by weight or less per 100

parts by weight of the content of the aromatic polycarbonate resin and the content of the sulfone resin in total.

**9.** The resin composition according to any one of claims 1 to 8 comprising the silicon-containing particles, wherein the silicon-containing particles are core-shell particles each comprising a core and a shell disposed on a surface of the core.

**10.** The resin composition according to any one of claims 1 to 9 comprising a fluororesin, wherein a content of the fluororesin is 0.5 parts by weight or more and 2 parts by weight or less per 100 parts by weight of the content of the aromatic polycarbonate resin and the content of the sulfone resin in total.

**11.** A molded article obtainable by molding the resin composition according to any one of claims 1 to 10.

**12.** The molded article according to claim 11 being in a sheet form.

**13.** The molded article according to claim 11 or 12, wherein an average maximum heat generation rate measured in accordance with ISO5660-1 at an amount of heat radiated from a heater of 50 $kW/m^2$ with ignition is 130 $kW/m^2$ or less.

**14.** The molded article according to any one of claims 11 to 13 which is an interior material for a transport carrier.

**15.** The molded article according to any one of claims 11 to 14 which is an interior material for a railway vehicle.

**INTERNATIONAL SEARCH REPORT**

International application No. PCT/JP2020/000410

A. CLASSIFICATION OF SUBJECT MATTER
Int. Cl. C08K5/521(2006.01)i, C08L27/12(2006.01)i, C08L51/08(2006.01)i, C08L69/00(2006.01)i, C08L81/06(2006.01)i, C08K3/013(2018.01)i, C08K3/34(2006.01)i
FI: C08L69/00, C08L81/06, C08K5/521, C08L51/08, C08L27/12, C08K3/34, C08K3/013

According to International Patent Classification (IPC) or to both national classification and IPC

B. FIELDS SEARCHED

Minimum documentation searched (classification system followed by classification symbols)
Int. Cl. C08K5/521, C08L27/12, C08L51/08, C08L69/00, C08L81/06, C08K3/013, C08K3/34

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2011-95468 A (SHIN-ETSU POLYMER CO., LTD.) 12 May 2011, claims, paragraphs [0004], [0013], [0020], [0021], [0024]-[0027] | 1-8, 10-13<br>1-15 |
| X<br>Y | JP 2007-314766 A (MITSUBISHI ENGINEERING-PLASTICS CORP.) 06 December 2007, claims, paragraphs [0001], [0015], [0044], [0111], [0149] | 1-13, 15<br>14 |
| Y | JP 2019-38895 A (SEKISUI CHEMICAL CO., LTD.) 14 March 2019, claims, paragraphs [0007], [0048], [0058]-[0076], [0089] | 1-15 |
| Y | WO 2018/047693 A1 (MITSUBISHI ENGINEERING-PLASTICS CORP.) 15 March 2018, claims, paragraphs [0001]-[0007], [0080], [0125]-[0137] | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26.02.2020 | 10.03.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/000410

C (Continuation). DOCUMENTS CONSIDERED TO BE RELEVANT

| Category* | Citation of document, with indication, where appropriate, of the relevant passages | Relevant to claim No. |
|---|---|---|
| A | WO 2018/066210 A1 (SONY CORP.) 12 April 2018 | 1-15 |
| A | JP 5-117514 A (DENKI KAGAKU KOGYO KABUSHIKI KAISHA) 14 May 1993 | 1-15 |
| A | JP 2005-194381 A (IDEMITSU KOSAN CO., LTD.) 21 July 2005 | 1-15 |
| A | JP 8-27367 A (MITSUBISHI GAS CHEMICAL CO., INC.) 30 January 1996 | 1-15 |

Form PCT/ISA/210 (continuation of second sheet) (January 2015)

**INTERNATIONAL SEARCH REPORT**
Information on patent family members

International application No.
PCT/JP2020/000410

| Patent Documents referred to in the Report | Publication Date | Patent Family | Publication Date |
|---|---|---|---|
| JP 2011-95468 A | 12.05.2011 | (Family: none) | |
| JP 2007-314766 A | 06.12.2007 | US 2009/0215934 A1 claims, paragraphs [0001], [0045], [0074], [0130], [0229] EP 1992663 A1 CN 101395222 A | |
| JP 2019-38895 A | 14.03.2019 | (Family: none) | |
| WO 2018/047693 A1 | 15.03.2018 | EP 3511375 A1 claims, paragraphs [0001]-[0007], [0103], [0178]-[0200] CN 109689784 A | |
| WO 2018/066210 A1 | 12.04.2018 | CN 109804017 A | |
| JP 5-117514 A | 14.05.1993 | (Family: none) | |
| JP 2005-194381 A | 21.07.2005 | (Family: none) | |
| JP 8-27367 A | 30.01.1996 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11256035 A
- JP 2008516028 T
- DE 2842005 A